# EUROPÄISCHE PATENTSCHRIFT

(11) **EP 2 193 571 B1**
(45) Veröffentlichungstag und Bekanntmachung des Hinweises auf die Patenterteilung: **04.03.2015**
(21) Anmeldenummer: 08786750.3
(22) Anmeldetag: 01.08.2008
(51) Int. Cl.: H01R 4/02, H01R 13/405, H01R 13/533, H01R 43/16, G01D 11/24, G01K 1/14, G01L 19/14, G01N 27/407

(54) **KONTAKTIERUNGSMODUL FÜR SENSOR MIT BEGRENZTEM BAURAUM**
CONTACTING MODULE FOR SENSOR HAVING LIMITED INSTALLATION SPACE
MODULE D'ÉTABLISSEMENT DE CONTACT POUR DÉTECTEUR À ENCOMBREMENT RÉDUIT

(30) Priorität: 21.09.2007 DE 102007045179
(43) Veröffentlichungstag der Anmeldung: 09.06.2010
(73) Patentinhaber: Robert Bosch GmbH, 70442 Stuttgart (DE)
(72) Erfinder: STOLL, Oliver, 72762 Reutlingen (DE); ROESSER, Christian, 71723 Grossbottwar (DE); ENGELHARDT, Joerg, 71254 Ditzingen (DE)
(86) Internationale Anmeldenummer: PCT/EP2008/060130
(87) Internationale Veröffentlichungsnummer: WO 2009/040169

(56) Entgegenhaltungen:
- EP-A- 0 338 101
- EP-A- 0 859 231
- DE-A1- 19 526 821
- DE-U1- 20 105 615
- US-A- 5 628 639

## Beschreibung

### Stand der Technik

In verschiedenen Bereichen der Technik müssen Parameter von Medien, insbesondere fluider Medien wie beispielsweise von Gasen und/oder Flüssigkeiten, gemessen werden. Derartige Parameter umfassen beispielsweise einen Druck, eine Temperatur, eine Strömungsgeschwindigkeit, eine Dichte oder ähnliche physikalische und/oder chemische Eigenschaften bzw. Parameter des Mediums. Die folgende Beschreibung der Erfindung bezieht sich insbesondere auf Anwendungen, bei welchen gleichzeitig ein Druck (p) und eine Temperatur (T) gemessen werden sollen, was beispielsweise mit kombinierten p-T-Sensoren möglich ist. Die Erfindung ist jedoch nicht auf derartige p-T-Sensoren beschränkt, sondern kann auch im Rahmen anderer Sensoren zur Messung mindestens einer Eigenschaft eines Mediums, insbesondere eines fluiden Mediums, zum Einsatz kommen. Ein wichtiges Anwendungsbeispiel von Sensoren der oben beschriebenen Art sind Druck- und Temperatursensoren für Klimaanlagen. In Klimaanlagen wird üblicherweise die Verdampfungswärme eines Kühlmittels zum Abkühlen von Luft (oder eines anderen zu kühlenden Mediums) genutzt. Anschließend wird in einem Kompressor das Kühlmittel wieder verdichtet und damit verflüssigt. Beim Verdichten tritt eine Erwärmung des Kühlmittels auf. Die aufgenommene Wärme wird üblicherweise mittels eines Gaskühlers wieder an die Umgebung abgegeben. Der Verdichtungsvorgang mittels des Kompressors muss dabei in der Regel derart gesteuert werden, dass der Betriebsdruck einen vorgegebenen Maximaldruck und die Betriebstemperatur eine vorgegebene Maximaltemperatur nicht übersteigen. Druck und Temperatur müssen zu diesem Zweck erfasst werden. Neben diesem Anwendungsbeispiel in Klimaanlagen sind zahlreiche weitere Anwendungsbeispiele von Sensoren, insbesondere von Druck- und Temperatursensoren, aus den verschiedensten Gebieten der Naturwissenschaften und Ingenieurwissenschaften, insbesondere der Verfahrenstechnik und dem Automobilbau, bekannt. Weitere zu nennende Beispiele, insbesondere für Sensoren mit integrierten Temperaturfühlern (bisweilen auch als "Kombisensoren" bezeichnet) sind die Messung eines Saugrohrdrucks, die Luftmassenmessung mittels eines Heißfilmluftmassenmessers und ähnliche Anwendungen.

In vielen dieser Anwendungen wird ein Messfühler, beispielsweise ein Temperaturfühler und/oder ein Druckfühler, welcher in der Lage ist, die mindestens eine zu bestimmende Eigenschaft des Mediums zu messen, eingesetzt. Dabei müssen die Sensoren in der Regel verschiedenen Randbedingungen genügen, welche sich beispielsweise aus dem Einsatzgebiet und der Herstellung ergeben. So sind beispielsweise in vielen Fällen, beispielsweise für den Einsatz in Klimaanlagen, kombinierte Druck- und Temperatursensoren (PTS) in einem Stahl-Gewindestück gekapselt, welches in eine Wand des Gehäuses, in welchem das zu messende fluide Medium aufgenommen ist, eingeschraubt werden kann. Dieses Stahl-Gewindestück muss dabei hohen Dichtigkeitsanforderungen genügen. Der zur Verfügung stehende Bauraum für den oder die Messfühler innerhalb des PTS, insbesondere für den Temperaturfühler (wobei es sich beispielsweise um einen Temperaturwiderstand mit negativem Temperaturkoeffizienten, NTC, handeln kann) und für die entsprechende elektrische Kontaktierung desselben bzw. derselben ist zumeist extrem begrenzt. Dabei müssen Kurzschlüsse bei der Herstellung zuverlässig vermieden werden. Diese Problematik wird in vielen Fällen noch verschärft durch die vom System gegebene Randbedingung, dass in der Regel die Messstelle oder die Messstellen, an welchen die mindestens eine Größe des Mediums erfasst werden soll, in der Mitte des Sensors oder in der Mitte eines Strömungsrohres sitzen sollte. Weiterhin muss der Sensor in vielen Fällen (je nach Anwendung) hohen Schüttelanforderungen genügen, was beispielsweise bei Messungen im Rahmen einer Benzindirekteinspritzung eine hohe Belastung darstellt.

Aus dem Stand der Technik sind daher verschiedene Sensoren bekannt, welche insbesondere im Automobilbereich einsetzbar sind und welche die oben beschriebenen Probleme und Randbedingungen berücksichtigen. Ein Ausführungsbeispiel eines derartigen Sensors, welcher zur Erfassung des Drucks und der Temperatur im Saugrohr einer Brennkraftmaschine eingesetzt wird, ist in DE 197 31 420 A1 in verschiedenen Ausführungsformen dargestellt. Dabei sind ein Temperaturfühler und ein Druckfühler in einem gemeinsamen Gehäuse angeordnet. Zur Kontaktierung des Temperaturfühlers wird vorgeschlagen, Anschlussleitungen des Temperaturfühlers abzuwinkeln und an ihren Enden in Dichtklebeverbindungen zu fixieren. Zur Kontaktierung dieser Anschlussleitungen mit extern zugänglichen Steckerkontaktstiften wird weiterhin vorgeschlagen, die Anschlussleitungen über Scheid-Klemm-Verbindungen mit den Steckerkontaktstiften zu verbinden, oder, alternativ durch Schweißverbindungen oder durch Lötverbindungen.

Die aus dem Stand der Technik bekannten Sensoren, wie beispielsweise der in DE 197 31 420 A1 beschriebene Sensor, stellen in der Regel zuverlässige und mediendichte Kontaktierungen der einzelnen Messfühler bereit. Dennoch beinhalten diese Lösungen einige technische Herausforderungen, welche insbesondere den Aufwand einer Großserienfertigung erheblich erhöhen. Eine besondere Schwierigkeit stellt nach wie vor das Handling und die Kontaktierbarkeit der einzelnen Messfühlerzuleitungen dar. Um ein Handling in einer Großserienfertigung zu ermöglichen, müssen in der Regel Messfühler eingesetzt werden, welche vergleichsweise große Abmessungen und dicke Zuleitungen aufweisen, um eine sichere Handhabung in der Fertigung und eine zuverlässige Kontaktierung zu gewährleisten. Diese zusätzlichen Randbedingungen sind jedoch nicht in allen Fällen wünschenswert. Werden hingegen dünne Zuleitungen eingesetzt, so wird die Handhabung erschwert, und es erhöht sich die Gefahr, dass Kurzschlüsse zwischen den einzelnen Zuleitungen entstehen. Zudem stellt, solange keine externen sondern integrierte Schaltungsträger verwendet werden, eine elektrische Verbindung zwischen den Messfühlern und Schaltungsträgern eine Herausforderung dar. Im Rahmen einer Miniaturisierung und Dezentralisierung ist jedoch die Integration wichtiger Schaltungskomponenten in den Sensor von großer Bedeutung.

Eine weitere Schwierigkeit, welche sich bei der Großserienfertigung bemerkbar macht, besteht darin, dass in vielen Fällen die Messfühler, beispielsweise Temperaturfühler, in eine schräge und enge Bohrung eines Sensorgehäuses eingeführt werden müssen. Dies ist beispielsweise erforderlich, da in PTS beispielsweise ein Druck und eine Temperatur möglichst zentral auf einer Symmetrieachse des Sensorgehäuses gemessen werden sollen, was beispielsweise dadurch realisiert wird, dass ein schräger Messfinger, welcher den Temperaturfühler beinhaltet, schräg bishin zur Sensorachse geführt wird. Dies wiederum erschwert die Montage des Sensors erheblich.

Ein weiteres Problem stellt nach wie vor in vielen Fällen bei der Montage die Sicherstellung einer zuverlässigen Vibrationsbeständigkeit dar, welche beispielsweise derart ausgestaltet sein muss, dass auch bei starken Vibrationsbelastungen Kurzschlüsse zwischen einzelnen Zuleitungen vermieden werden und dass beispielsweise eine zuverlässige und vibrationsfeste Anbindung der elektrischen Zuleitungen des Messfühlers an einen integrierten Schaltungsträger des Sensors gewährleistet ist.

### Offenbarung der Erfindung

Es wird daher ein Sensor sowie ein Verfahren zur Herstellung des Sensors vorgeschlagen, welche die Nachteile bekannter Vorrichtungen und Verfahren zumindest weitgehend vermeiden. Dadurch wird eine zuverlässige Großserienfertigung ermöglicht, welche auch eine Montage von Temperaturfühlern in engem Bauraum, beispielsweise in engen, schrägen Bohrungen, möglich macht. Kurzschlüsse werden zuverlässig vermieden, und die Vibrationsbeständigkeit wird deutlich erhöht. Das Handling und die Kontaktierung werden dadurch auch in Großserienfertigung ermöglicht, wobei auch Sensoren mit Schaltungsträgern herstellbar sind, mit einer zuverlässigen elektrischen Verbindung zwischen den Messfühlern des Sensors und dem Schaltungsträger.

Es wird ein Sensor vorgeschlagen, welcher mindestens einen Messfühler zur Erfassung mindestens einer Messgröße und einen Sensorkörper zur Halterung des Messfühlers aufweist. Insofern kann der vorgeschlagene Sensor beispielsweise einem der oben beschriebenen Sensoren zur Erfassung mindestens einer Messgröße eines Mediums, insbesondere eines fluiden Mediums, entsprechen. Ein besonderer Schwerpunkt liegt auf der Anwendung in Sensoren, welche eine Temperatur und/oder einen Druck erfassen. Auch auf andere Arten von Sensoren ist die Erfindung jedoch anwendbar. Der Messfühler, welcher beispielsweise einen Temperaturwiderstand, insbesondere einen Widerstand mit negativem Temperaturkoeffizient (NTC), umfassen kann, weist mindestens eine Anschlussleitung, in der Regel zwei oder mehr Anschlussleitungen, auf, welche elektrisch kontaktiert werden.

Im Unterschied zu bekannten Sensoren, wie beispielsweise dem aus DE 197 31 420 bekannten Sensor, bei welchem die Kontaktierung des Messfühlers in das Sensorgehäuse selbst integriert ist, wird erfindungsgemäß vorgeschlagen, den Sensor selbst modular aufzubauen und ein separates Kontaktierungsmodul zur elektrischen Kontaktierung der mindestens einen Anschlussleitung vorzusehen. Dieses Kontaktierungsmodul stellt dabei eine sichere, mechanisch stabile und vibrationsfeste Verbindung her, welche Kurzschlüsse zwischen den Anschlussleitungen zuverlässig vermeidet und welche eine Großserienfertigung ermöglicht. Unter einem separaten Kontaktierungsmodul ist dabei ein Modul zu verstehen, welches von dem Sensorkörper getrennt ausgebildet ist, also getrennt hergestellt werden kann, und welches beispielsweise anschließend ganz oder teilweise in den Sensorkörper eingefügt werden kann. Dort kann dieses dann fixiert werden, beispielsweise durch eine stoffschlüssige und/oder eine kraftschlüssige und/oder eine formschlüssige Verbindung.

Das Kontaktierungsmodul weist mindestens einen Steckerkontaktstift auf, wobei vorzugsweise pro Anschlussleitung mindestens ein Steckerkontaktstift vorgesehen ist. Diese Steckerkontaktstifte sind vorzugsweise in Leadframe-Technologie hergestellt, das heißt mittels einer Stanztechnologie aus einem größeren Metallteil, beispielsweise einem Blechteil, beispielsweise einem Stahl- und/oder Kupferblechteil. Insbesondere können diese Steckerkontaktstifte in Großserienfertigung als Band hergestellt sein und können durch Metallstege zur besseren Verarbeitbarkeit verbunden sein, wobei diese Metallstege anschließend bei der Verarbeitung entfernt werden können, beispielsweise mittels eines Stanzprozesses. Unter einem "Steckerkontaktstift" ist dabei ein im Wesentlichen mechanisch stabiles Teil zu verstehen, welches auch unter üblichen mechanischen Belastungen bei der Handhabung und im Einsatz seine Form nicht wesentlich verändert. Die Bezeichnung "Stift" sagt dabei nichts über eine mögliche Geometrie aus, so dass beispielsweise dieser Stift in lang gestreckter stabförmiger Form oder auch in winkliger, gebogener Form vorliegen kann. Besonders bevorzugt ist dabei die winklig vorgebogene Form zur exakten Ausrichtung, wobei der Steckerkontaktstift, wie unten näher ausgeführt, vorzugsweise auch Schweißflächen für Schweißstempel aufweisen kann.

Der Steckerkontaktstift ist in mindestens einem Verbindungsbereich von einem Verbindungselement des Kontaktierungsmoduls umgeben und steht in elektrischer Verbindung zu der mindestens einen Anschlussleitung. Dieses Verbindungselement sollte insbesondere gute elektrisch isolierende Eigenschaften aufweisen, um den Steckerkontaktstift und/oder die Anschlussleitung elektrisch gegenüber der Umgebung und/oder gegenüber anderen Anschlussleitungen bzw. Steckerkontaktstiften zu isolieren. Das Verbindungselement kann beispielsweise dadurch hergestellt werden, dass der Steckerkontaktstift zumindest teilweise mit einem Kunststoffbauteil umspritzt wird, wobei beispielsweise in der Kraftfahrzeugtechnik übliche Kunststoffe, wie zum Beispiel Polypropylene, Polyamide oder ähnliche Thermoplaste eingesetzt werden können. Alternativ oder zusätzlich ist jedoch auch die Verwendung von Keramikmaterialien möglich, was jedoch weniger bevorzugt ist.

Das Verbindungselement weist vorzugsweise mindestens eine Nut zum Einbringen der Anschlussleitung auf. Besonders bevorzugt ist es, wenn für jede Anschlussleitung eine einzelne Nut vorgesehen ist. Unter einer "Nut" ist dabei eine lang gestreckte Vertiefung zu verstehen, in welche die Anschlussleitung bzw. die Anschlussleitungen eingelegt werden können, wobei die Nut beispielsweise ein rechteckförmiges Querschnittsprofil, ein abgerundetes Querschnittsprofil oder ein V-förmiges Querschnittsprofil aufweisen kann. Auch andere Arten von Profilen sind jedoch denkbar. Besonders bevorzugt ist es, wenn die Nut derart an die Dimensionen der Anschlussleitung angepasst ist, dass die Anschlussleitung im in die Nut eingelegten Zustand im Wesentlichen kein mechanisches Spiel aufweist.

Dabei ist das Verbindungselement vorzugsweise in dem mindestens einen Verbindungsbereich derart ausgestaltet, dass ein Zugang zu dem Steckerkontaktstift ermöglicht ist. Die Nut ist vorzugsweise derart zu dem Verbindungsbereich angeordnet, dass bei in die Nut eingebrachter Anschlussleitung in dem Verbindungsbereich ein Kontakt zwischen dem Steckerkontaktstift und der Anschlussleitung, insbesondere einem abisolierten Ende der Anschlussleitung, herstellbar ist. Dies bedeutet, dass der Steckerkontaktstift und die Anschlussleitung bzw. ein Ende der Anschlussleitung im Verbindungsbereich sich stark räumlich annähern können, so dass beispielsweise ein Abstand zwischen diesen beiden Elementen besteht, welcher nicht mehr als einen Durchmesser der Anschlussleitung beträgt, was eben falls noch im Umfang des Begriffes "Kontakt" erfasst sein soll. Auf diese Weise ist in diesem Verbindungsbereich anschließend, das heißt nach Einlegen der Anschlussleitung in die Nut, im Verbindungsbereich eine elektrische Verbindung zwischen dem Steckerkontaktstift und der Anschlussleitung herstellbar, wobei beispielsweise eine Leitkleberverbindung, eine Lötverbindung oder eine andere elektrische Verbindungsart eingesetzt werden kann. Besonders bevorzugt ist es, wenn eine Schweißverbindung verwendet wird, insbesondere durch Widerstandsschweißen mit einem oder mehreren Schweißstempeln. Dies wird insbesondere dadurch ermöglicht, wenn der Verbindungsbereich die Aufnahme eines derartigen Schweißstempels ermöglicht. Mittels dieses Schweißstempels können beispielsweise die Anschlussleitung und der Steckerkontaktstift gegeneinander gepresst und verschweißt werden. Somit können durch die erfindungsgemäße Ausgestaltung des Kontaktierungsmoduls im Verbindungsbereich der Steckerkontaktstift und die Anschlussleitung elektrisch miteinander verbunden werden.

Das vorgeschlagene Kontaktierungsmodul stellt somit eine mechanisch feste und elektrisch sichere Verbindung zwischen den Anschlussleitungen und den Steckerkontaktstiften her. Das Kontaktierungsmodul kann insbesondere auch unabhängig von den übrigen Komponenten des Sensors gefertigt werden, im Gegensatz zu bekannten Konstruktionen, bei welchen die Messfühler beispielsweise unmittelbar in ein Sensorgehäuse integriert (beispielsweise eingeklebt) werden. Hierdurch kann beispielsweise auch ein Funktionstest vor der Endmontage erfolgen, was den Ausschuss verringern kann. Auch ermöglicht der vorgeschlagene modulare Aufbau mit einem Kontaktierungsmodul als eigenständigem Bauteil eine höhere Parallelität der Fertigung und somit einen erhöhten Durchsatz. Weiterhin kann ein gemeinsames Kontaktierungsmodul der oben beschriebenen Art für mehrere Verbindungen genutzt werden, beispielsweise für zwei Verbindungen eines Sensors. In diesem Fall kann beispielsweise das Kontaktierungsmodul derart ausgestaltet sein, dass das Verbindungsmodul zwei Steckerkontaktstifte und zwei Anschlussleitungen umfasst, welche jeweils paarweise miteinander verbunden sind, wobei die Paare elektrisch gegeneinander isoliert sind. Beispielsweise kann es sich hierbei um die beiden Anschlussleitungen eines NTCs handeln.

Der Sensor mit dem Kontaktierungsmodul ist insbesondere für eine Großserienfertigung geeignet. So kann insbesondere die Verwendung eines winklig vorgebogenen Leadframes für die Steckerkontaktstifte zu einer exakten Ausrichtung des mindestens einen Messfühlers beitragen, was insbesondere von Vorteil ist, wenn dieser mindestens eine Messfühler auf bestimmte Weise ausgerichtet werden muss, beispielsweise relativ zu einer Bohrung. Die Leadframe-Technologie, insbesondere mit der oben beschriebenen Verwendung von Metallstegen zwischen den einzelnen Steckerkontaktstiften, sowie die damit verbundene Verarbeitbarkeit als Band, tragen weiter zur Großserientauglichkeit bei. Schweißflächen für Schweißstempel können implementiert werden, was eine großserientaugliche Verbindungstechnologie ermöglicht. Gleichzeitig stellen die Nuten des Verbindungselements zuverlässige Führungsnuten dar, welche die Anschlussleitungen des bzw. der Messfühler bei der elektrischen Kontaktierung, beispielsweise bei der Schweißung, fixieren und welche als Montagehilfe dienen.

Wie oben dargestellt, können in einer bevorzugten Ausführungsform die Nuten zur Ausrichtung der Anschlussleitungen eingesetzt werden. Dementsprechend kann beispielsweise der mindestens eine Steckerkontaktstift im Verbindungsbereich eine Steckerrichtung definieren, beispielsweise eine Richtung, welche einer Einschraubrichtung des Sensors in ein Gehäuse entspricht, eine Richtung, welche einer Anbindung des Steckerkontaktstifts an einen Schaltungsträger entspricht oder eine andere Richtung. Die Steckerrichtung soll sich im Wesentlichen parallel zur Längserstreckung des Steckerkontaktstiftes erstrecken. Zur Ausrichtung der mindestens einen Anschlussleitung kann die mindestens eine Nut dann winklig zu der Steckerrichtung ausgerichtet sein, beispielsweise in einem Winkel zwischen 0° und 90° zu dieser Steckerrichtung. Besonders bevorzugt sind Ausrichtungen in einem Winkel zwischen 10° und 25° und besonders bevorzugt im Bereich zwischen 15° und 20°, da diese Winkelbereiche für die winklige Einbringung eines Temperaturfühlers in eine Bohrung eines kombinierten Druck-Temperatursensors besonderes geeignet sind.

Vorzugsweise kann das mindestens eine Verbindungselement bzw. das Kontaktierungsmodul auch bei der Montage des Sensors genutzt werden, um eine Einführung des mindestens einen Messfühlers in eine Bohrung, beispielsweise eine schräge Bohrung, beispielsweise eine Bohrung innerhalb eines Messfingergehäuses des Sensors, zu erleichtern. Zu diesem Zweck kann vorzugsweise das mindestens eine Verbindungselement im Bereich der mindestens einen Nut mindestens einen Einführabschnitt zum Einführen des Messfühlers in eine Messfühlerbohrung aufweisen. Dabei sollte der Einführabschnitt vorzugsweise zumindest teilweise im Wesentlichen parallel zu der Nut orientiert sein, wobei jedoch auch Abweichungen von der Parallelität möglich sind, beispielsweise Abweichungen von nicht mehr als 20°, vorzugsweise nicht mehr als 15°. Um eine Einführtiefe des Messfühlers in die Messfühlerbohrung und/oder des Einführabschnitts in die Messfühlerbohrung zu begrenzen, kann der Einführabschnitt weiterhin mindestens einen Anschlag aufweisen. Weiterhin können am Einführabschnitt umfangsseitig eine oder mehrere Rastnasen vorgesehen sein, welche eine Positionierung, insbesondere eine Drehpositionierung, des Einführabschnitts in der Messfühlerbohrung fixieren können. Auf diese Weise wird eine gleichmäßige, zuverlässige und großserienfertigungstaugliche Montagetechnik mit geringen Bauteiltoleranzen möglich.

Das Kontaktierungsmodul kann besonders bevorzugt in einem erfindungsgemäßen Sensor eingesetzt werden, welcher neben dem mindestens einen Kontaktierungsmodul weiterhin mindestens einen Messfühler zur Erfassung mindestens einer Messgröße aufweist, wobei der Sensor wiederum mindestens eine Anschlussleitung aufweist. Wie oben beschrieben, lassen sich derartige Sensoren insbesondere als Kombinierte Druck-Temperatur-Sensoren (PTS) einsetzen. Dabei sind bei dem vorgeschlagenen Sensor, der mindestens eine Steckerkontaktstift des Kontaktierungsmoduls und die mindestens eine Anschlussleitung des Messfühlers miteinander verbunden, beispielsweise an einem Ende der Anschlussleitung.

Diese Verbindung kann, wie oben beschrieben, eine nahezu beliebige leitende Verbindung umfassen, wobei jedoch eine stoffschlüssige Verbindung, insbesondere eine Schweißverbindung, bevorzugt ist.

Wie oben dargestellt, ist es beispielsweise möglich, den Steckerkontaktstift für eine externe Kontaktierung des Sensors zu nutzen. Zu diesem Zweck kann der Steckerkontaktstift, wie beispielsweise in DE 197 31 420 A1 beschrieben, aus einem Gehäuse des Sensors herausgeführt werden, beispielsweise an einem externen Steckerkontakt. Alternativ ist es jedoch bevorzugt, wenn der Sensor selbst einen Schaltungsträger beinhalten. Dieser Schaltungsträger kann beispielsweise in einem Gehäuse des Sensors aufgenommen sein und kann beispielsweise einen oder mehrere elektronische Komponenten beinhalten. Beispielsweise können auf dem mindestens einen Schaltungsträger integrierte Schaltkreise zur Signalverarbeitung oder zur Durchführung anderer Arten von Operationen, sowie, alternativ oder zusätzlich, passive elektronische Komponenten aufgenommen sein. In diesem Fall kann insbesondere mindestens einer der Steckerkontaktstifte (d.h. alle oder einzelne der Steckerkontaktstifte) mit mindestens einem elektrischen Kontakt des Schaltungsträgers verbunden sein, insbesondere mit einer Kontaktbohrung oder Durchkontaktierung. So kann beispielsweise der Schaltungsträger eine oder mehrere derartiger Kontaktbohrungen aufweisen, und der Steckerkontaktstift wird durch diese in einer through-hole-technology oder Durchkontaktierungstechnologie verbunden, beispielsweise durch Löten. Der Steckerkontaktstift, welcher, wie oben beschrieben, insbesondere in Leadframe-Technologie hergestellt sein kann, kann die erforderliche mechanische Steifigkeit bereitstellen, um ein problemloses Einführen in eine derartige Kontaktbohrung zu ermöglichen.

Neben dem oben beschriebenen Sensor und dem Kontaktierungsmodul in jeweils einer der dargestellten Ausführungsformen wird erfindungsgemäß ein Verfahren zur Herstellung eines Kontaktierungsmoduls in einer der dargestellten Ausführungsformen vorgeschlagen. Dabei wird bevorzugt für die Bereitstellung der Steckerkontaktstifte, wobei in diesem Fall vorzugsweise mindestens zwei Steckerkontaktstifte vorgesehen sein sollen, eine Bandtechnologie verwendet. Hierbei können mindestens zwei Steckerkontaktstifte als Bandware durch mindestens einen Steg verbunden sein, wobei bei der Herstellung der mindestens eine Steg durchtrennt wird, beispielsweise durch ein Stanzverfahren, um eine elektrische Isolierung der mindestens zwei Steckerkontaktstifte gegeneinander zu erzeugen. Insbesondere kann das Verfahren zur Bereitstellung der Steckerkontaktstifte eine Leadframe-Technologie einsetzen, bei welcher mindestens ein Blechmaterial, insbesondere ein Kupferblechmaterial, gestanzt wird. Das Verbindungselement kann, wie oben dargestellt, insbesondere durch Umspritzen der Steckerkontaktstifte hergestellt werden.

Zur Herstellung des Sensors in einer der dargestellten Ausführungsformen wird insbesondere ein Verfahren vorgeschlagen, bei welchem mindestens ein Schweißstempel in den Verbindungsbereich eingebracht wird, um den mindestens einen Steckerkontaktstift und die mindestens eine Anschlussleitung in diesem Verbindungsbereich zu verschweißen. Beispielsweise können mehrere Schweißstempel gleichzeitig in mehrere Verbindungsbereiche des Kontaktierungsmoduls eingeführt werden, so dass der Schweißvorgang hochgradig parallelisiert durchgeführt werden kann.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: eine Schnittdarstellung eines bekannten Druck-Temperatur-Sensors;
- Figur 2: eine Seitenansicht eines Kontaktierungsmoduls mit einem Temperaturfühler;
- Figur 3: eine Schnittdarstellung des Kontaktierungsmoduls gemäß Figur 2;
- Figur 4: eine Draufsicht auf das Kontaktierungsmodul gemäß Figur 2 von oben;
- Figur 5: eine ausschnittsweise Darstellung eines erfindungsgemäßen Sensors mit einem teilweise in eine Temperaturfühlerbohrung eingeschobenen Kontaktierungsmodul gemäß Figur 2;
- Figur 6: eine Montageverfahren zur Montage des Kontaktierungsmoduls gemäß Figur 2; und
- Figur 7: ein Zwischenschritt der Herstellung mehrerer Kontaktierungsmodule in einem Bandverfahren in Leadframe-Technologie.

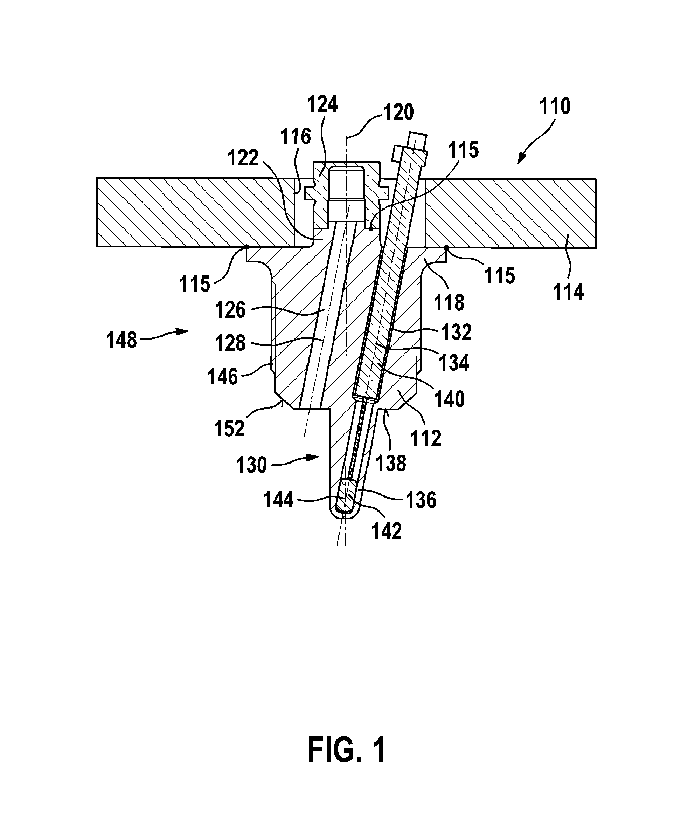

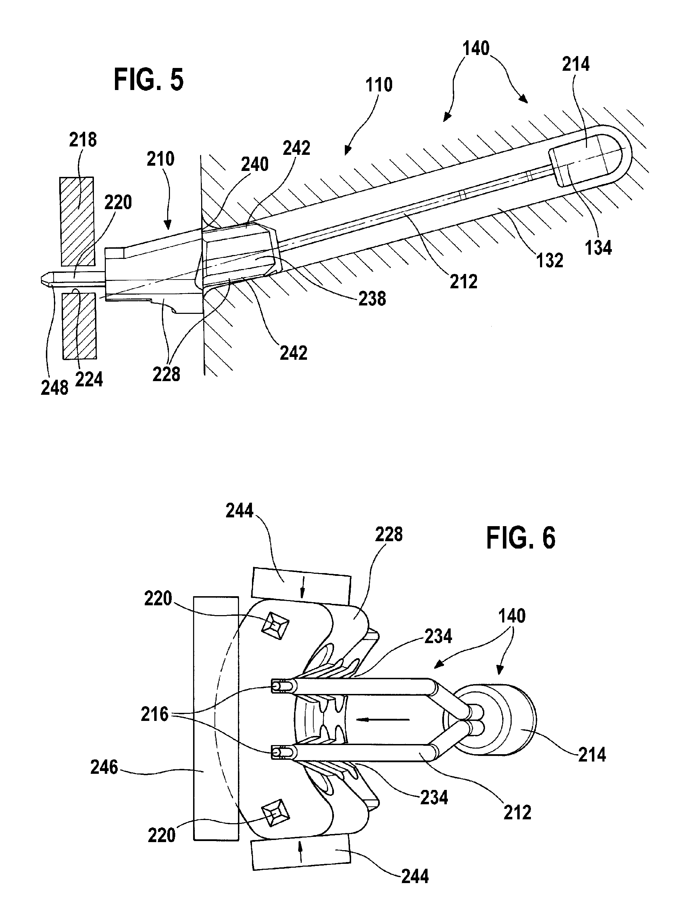

In Figur 1 ist ein mögliches Ausführungsbeispiel eines Sensors 110 in Schnittdarstellung gezeigt, wie er als Druck-Temperatur-Sensor aus dem Stand der Technik bekannt ist. Diese Darstellung soll die allgemeine Problematik der Kontaktierung, deren Lösung anhand der nachfolgenden Figuren näher erläutert wird, verdeutlichen. Der Sensor 110 ist hier als Steckfühler ausgebildet. Der Steckfühler weist einen Sensorkörper 112 auf. Oberhalb des Sensorkörpers 112 ist ein Sechskant 114 mit einer zentralen Bohrung 116 vorgesehen. Der Sensorkörper 112 ist mit dem Sechskant 114 beispielsweise durch eine stoffschlüssige Verbindung 115 (beispielsweise Schweißen) verbunden, dergestalt, dass der Sensorkörper 112 konzentrisch zur zentralen Bohrung 116 angeordnet ist und dass die Oberseite des Sensorkörpers 112 durch die zentrale Bohrung 116 zugänglich ist. Auf diese Weise können beispielsweise auf der O-berseite des Sechskants 114 in Figur 1 elektronische Ansteuerkomponenten angeordnet werden, beispielsweise Steckverbindung zur Kontaktierung des Steckfühlers. Auch ein oder mehrere Schaltungsträger gemäß der obigen Beschreibung können hier angeordnet sein, welche in Figur 1 nicht dargestellt sind. Diese Schaltungsträger können beispielsweise zur Verarbeitung oder Vorverarbeitung von Signalen des Sensors dienen, bevor diese nach außen weitergegeben werden, oder können einer Stromversorgung oder Spannungsversorgung des Sensors dienen (siehe Bezugsziffer 218 in Figur 5). Die stoffschlüssigen Verbindungen der einzelnen Bauteile sind in Figur 1 allgemein mit dem Bezugszeichen 115 bezeichnet. Der Sensorkörper 112 weist zum Zweck einer stoffschlüssigen Verbindung 115 zwischen Sensorkörper 112 und Sechskant 114 an seinem oberen, dem Sechskant 114 zugewandten Ende einen Ansatz 118 mit einer Auflagefläche 154 auf. Der Sensorkörper 112 weist eine Sensorkörperachse 120 auf. Am oberen Ende des Sensorkörpers 112 ist ein Sensoransatz 122 vorgesehen, welcher im montierten Zustand des Sensors 110 in die zentrale Bohrung 116 hineinragt und auf welchen, symmetrisch zur Sensorkörperachse 120, ein Drucksensor 124 aufgesetzt und vorzugsweise ebenfalls durch eine stoffschlüssige Verbindung 115 angebunden ist. Beispielsweise kann es sich dabei um einen Membran-Drucksensor 124 handeln.

Vom Ansatz 118 verläuft eine Durchgangsbohrung 126 mit einer Durchgangsbohrungsachse 128 hin zu dem zu messenden fluiden Medium zugewandten Ende 130 des Sensors 110. Die Durchgangsbohrungsachse 128 ist dabei von der Sensorkörperachse 120 weggeneigt und schließt mit dieser einen Winkel von (in diesem Ausführungsbeispiel) ca. 10°. Auch andere Winkel sind möglich, wie unten näher ausgeführt wird. Weiterhin ist in Sensorkörper 112 eine Temperaturfühlerbohrung 132 mit einer Temperaturfühlerbohrungsachse 134 aufgenommen. An seinem dem fluiden Medium zugewandten Ende 130 mündet diese Temperaturfühlerbohrung 132 als Sacklochbohrung in einem Messfinger 136, welcher in das fluide Medium, ausgehend von einer im Wesentlichen kreisförmigen Stirnfläche 138, hineinragt. Dabei ist die Temperaturfühlerbohrungsachse 134 der Sensorkörperachse 120 zugeneigt, so dass diese einen Winkel von ebenfalls ca. 10° einschließen. In der Temperaturfühlerbohrung 132 ist ein Temperaturfühler 140 aufgenommen, welcher an seinem unteren Ende eine Temperatursensorelement 142 aufweist. Bei dem Temperatursensorelement kann es sich beispielsweise um einen NTC-Widerstand handeln. Das Temperatursensorelement 142 wird beispielsweise mittels eines thermisch leitenden Klebers in der Temperaturfühlerbohrung 132 vergossen und dadurch gleichzeitig fixiert und thermisch in den Messfinger 136 angekoppelt.

Durch die schräge Anordnung der Temperaturfühlerbohrung 132 relativ zur Sensorkörperachse 120 ist gewährleistet, dass das Temperatursensorelement 142 zentral im Medienstrom sitzt, unabhängig von der Orientierung, unter welcher der Sensor 110 in das Medium eingebracht wird. Dementsprechend ist die Temperaturfühlerbohrung 132 in diesem Ausführungsbeispiel derart gewählt, dass das Temperatursensorelement 142 gerade mittig über dem Schnittpunkt 144 zwischen Temperaturfühlerbohrungsachse 134 und Sensorkörperachse 120 zu liegen kommt. Der Sensor 110 ist derart ausgestaltet, dass dieser in eine (nicht dargestellte) Steckfühlerbohrung in einem Gehäuse eingeschraubt werden kann. Beispielsweise kann es sich bei dieser Steckfühlerbohrung um eine Bohrung in einem Gehäuse eines Rohrleitungssystems einer Klimaanlage, beispielsweise einer CO₂-Klimaanlage, handeln. Alternativ können auch andere Anwendungen erfolgen, beispielsweise eine Anwendung im Kraftstoffsystem einer BenzinDirekteinspritzung. Entsprechend der Anwendung taucht der Messfinger 136 in das zu messende fluide Medium ein. Dementsprechend wird die Länge des Sensors 110, also die Tiefe, in welcher der Schnittpunkt 144 im Inneren des fluiden Mediums liegt, derart gewählt, dass vorzugsweise dieser Schnittpunkt 144 zentral in einem Strömungsrohr des fluiden Mediums angeordnet ist. Um ein Einschrauben des Steckfühlers in die Steckfühlerbohrung zu ermöglichen, ist der Sensorkörper 112 mit einem Außengewinde 146 ausgestattet. Dieses Außengewinde 146 erstreckt sich dabei in dem dargestellten Ausführungsbeispiel lediglich über einen Teil der zylindermantelförmigen Außenfläche 148 des Sensorkörpers 112. Am Übergang zwischen der zylindermantelförmigen Außenfläche 148 und der Stirnfläche 138 des Sensorkörpers 112 ist eine Dichtfläche angeordnet, welche in diesem Ausführungsbeispiel die Form einer Kegeldichtung 152 aufweist.

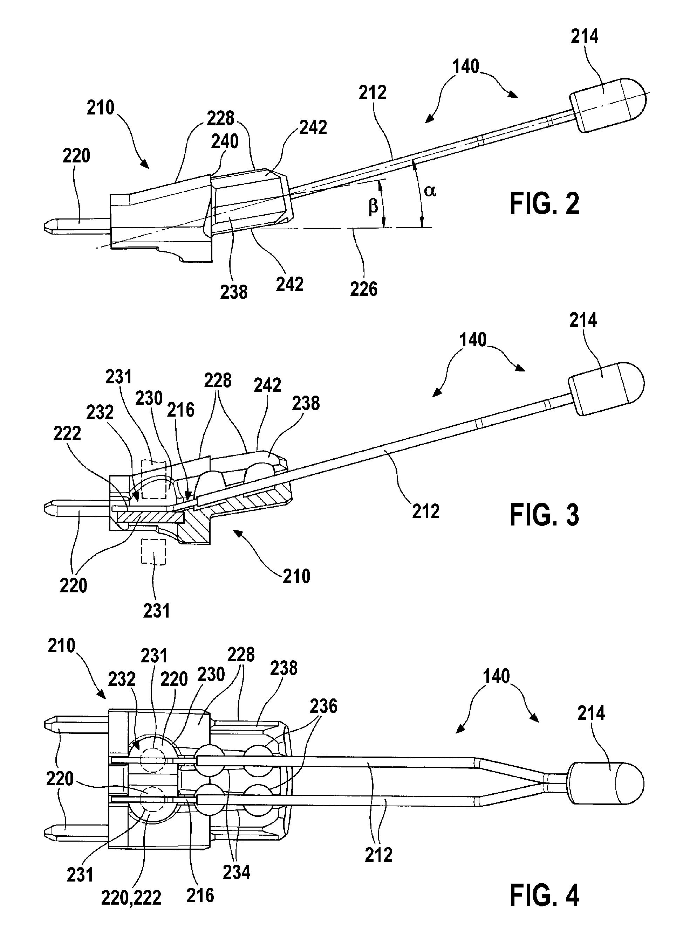

Das in Figur 1 dargestellte Ausführungsbeispiel des Sensors 110 verdeutlicht die Problematik der Kontaktierung typischer Messfühler, wie beispielsweise in diesem Ausführungsbeispiel des Temperaturfühlers 140. Dieser Temperaturfühler 140 muss in einem großserientauglichen Verfahren in eine Bohrung, in diesem Ausführungsbeispiel in die Temperaturfühlerbohrung 132, eingebracht werden. Gleichzeitig muss der Temperaturfühler 140 zuverlässig und vibrationsfest in einem ebenfalls großserientauglichen Verfahren elektrisch kontaktiert werden, beispielsweise mit einem Schaltungsträger verbunden werden. Zu diesem Zweck wird vorgeschlagen, ein in den Figuren 2 bis 5 beispielhaft dargestelltes Kontaktierungsmodul 210 in dem Sensor 110 zu verwenden. Dieses Kontaktierungsmodul 210 kann beispielsweise im Rahmen des in Figur 1 dargestellten Sensors 110 zum Einsatz kommen, kann jedoch auch für andere Arten von Sensoren eingesetzt werden.

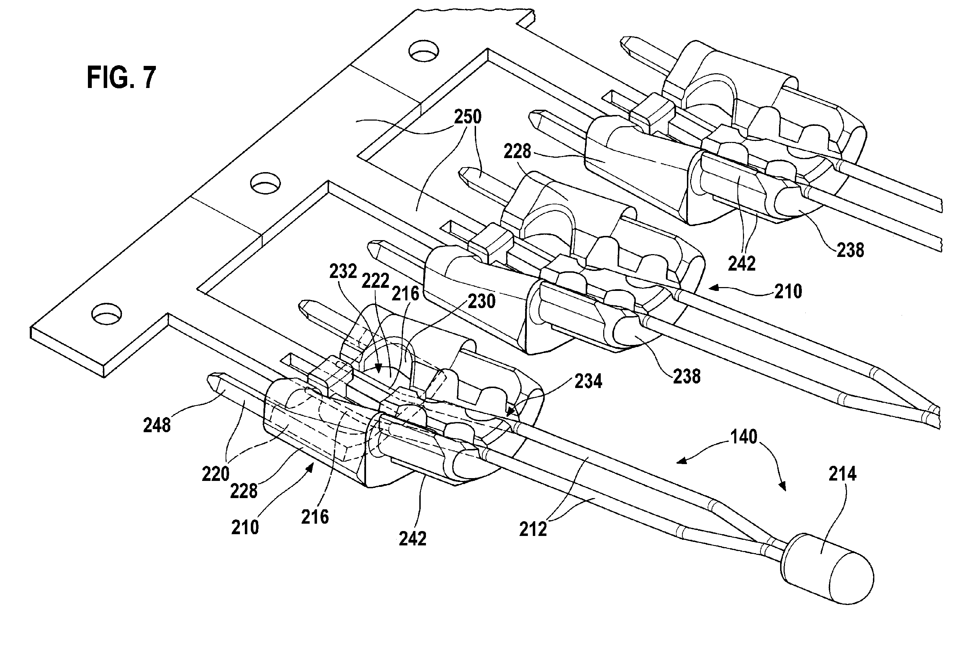

Das Kontaktierungsmodul ist in dargestellten Figuren in Zusammenhang mit einem Temperaturfühler 140 gezeigt, welcher über zwei Anschlussleitungen 212 und einen Temperaturfühlerkopf 214 verfügt. Die Anschlussleitungen 212 sind in Form von Drähten ausgestaltet welche beispielsweise einen Durchmesser von lediglich 0,15 mm an einem abisolierten Drahtende (216 in Figur 3) aufweisen. Um die vorgegebene Taktzeit einzuhalten und die Montage bzw. Anbindung an einen Schaltungsträger (siehe 218 in Figur 5) zu erleichtern, werden die Anschlussleitungen 212 auf Steckerkontaktstifte 220 in Form eines verzinnten Stanzgitters durch Schweißen, insbesondere durch Widerstandsschweißen, fixiert. Zu diesem Zweck können die Steckerkontaktstifte 220 Kontaktflächen 222 als Schweißflächen aufweisen. Diese Kontaktflächen 222 sind insbesondere in der Draufsicht gemäß Figur 4 erkennbar. Die Kontaktflächen 222 dürfen dabei, um eine elek-trische Isolierung gegeneinander zu gewährleisten, keine elektrische Verbindung untereinander aufweisen, was beispielsweise dadurch realisierbar ist, dass die Steckerkontaktstifte 220 als Bandware mit jeweils dazwischen liegenden Stegen hergestellt werden, welche bei der Herstellung ausgestanzt werden (siehe unten Figur 7).

Um die Lage und Position der Anschlussleitungen 212 des Temperaturfühlers 140 für eine spätere Verbindung mit dem Schaltungsträger, insbesondere für eine Einführung in Durchkontaktierungen 224 des Schaltungsträgers 218 (siehe Figur 5) zu erleichtern, gewährleistet, das Kontaktierungsmodul 210 gemäß den Figuren 2 bis 5 erfindungsgemäß eine exakte Ausrichtung der Steckerkontaktstifte 220 relativ zu den Anschlussleitungen 212. Insbesondere definieren in dem in den Figuren dargestellten Ausführungsbeispiel die Steckerkontaktstifte 220 eine Steckerrichtung 226, welche beispielsweise parallel zu der Sensorkörperachse 120 in Figur 1 liegen kann und welche mit einer Ausrichtung der Anschlussleitungen 212 einen Winkel α von in diesem Ausführungsbeispiel ca. 17° einschließt.

Um diese Ausrichtung zu gewährleisten, umfasst das Kontaktierungsmodul 210 gemäß den Figuren 2 bis 5 weiterhin ein Verbindungselement 228 in Form einer Kunststoffumspritzung. Diese Kunststoffumspritzung des Verbindungselements 228 umschließt einen Teil der Steckerkontaktstifte 220 und weist an Vorder- und Rückseite Aussparungen 230 auf, welche einen optimalen Zugang insbesondere zu einem Verbindungsbereich 232 ermöglichen, in welchem die abisolierten Enden 216 der Anschlussleitungen 212 mit den Steckerkontaktstiften 220 bzw. deren Kontaktflächen 222 verbunden werden, beispielsweise verschweißt werden. Die Aussparungen 230 ermöglichen beispielsweise ein Eintauchen von Scheißstempeln 231 in den Verbindungsbereich 232 (siehe beispielsweise die Figuren 3 und 4), welche beispielsweise ein Widerstandsschweißen der Enden 216 der Anschlussleitungen 212 auf die Kontaktflächen 222 der Steckerkontaktstifte 220 ermöglichen.

Um die Anschlussleitungen 212 des Temperaturfühlers 140 bei der Verbindung mit den Steckerkontaktstiften 220, insbesondere bei einem Widerstandsschweißen, zu fixieren und eine Auflagefläche für die Einführung bei der Montage zu realisieren, sind für jede der Anschlussleitungen 212 in dem Verbindungselement 220 jeweils eine Nut 234 vorgesehen (siehe insbesondere Figur 4). Diese Nuten 234 dienen als Führungsnuten und können beispielsweise zusätzliche Einführungsaussparungen 236 umfassen, welche ein Einlegen der Anschlussleitungen 212 in die Nuten 234 erleichtern (siehe Figur 4). Der Vorteil einer Nutenführung gegenüber einer kompletten Drahtumspritzung ist eine nahezu reibungslose Führung. Durch unterschiedliche Temperaturkoeffizienten der beteiligten Materialien können die Nuten 234 kaum Zug- bzw. Druckkräfte in den einzelnen Bauteilen des Sensors 110 aufbauen.

Um die Einführung des Temperaturfühlers 140 in die Temperaturfühlerbohrung 132 des Sensors 110 (siehe z.B. Figur 5) zu erleichtern und um eine Fixierung in dieser Temperaturfühlerbohrung 132 zu verbessern, weist das Verbindungselement 228 in diesem Einführungsbereich einen Einführabschnitt 238 mit einem Anschlag 240 auf. Der Einführabschnitt 238 weist einen Winkel β relativ zur Steckerrichtung 226 auf, welcher typischerweise zwischen 5° und 25° liegen kann, also in etwa dem Winkel α entspricht. Im vorliegenden Fall liegt dieser Winkel β bei ca. 10°. Der Einführabschnitt 238 weist für eine sichere Verankerung und Lagebestimmung innerhalb der Temperaturfühlerbohrung 132 in den nachfolgenden Montageschritten eine Anzahl von Rastnasen 242 auf, welche umfangsseitig am Umfang der Kunststoffumspritzung (d.h. dem Verbindungselement 228) angeordnet sind und welche angeschrägt sind. Diese definieren die Lage des Einführabschnitts 238 und damit des gesamten Kontaktierungsmoduls 210, bis in den nachfolgenden Montageschritten der Schaltungsträger 218 aufgesetzt wird.

Um den Temperaturfühler 140 in einer Bohrung des Sensors 110 insbesondere in einer Temperaturfühlerbohrung 132, exakt zu positionieren, ist dessen Lage bei der Fertigung genau zu bestimmen. Zu diesem Zweck kann beispielsweise ein Greiferwerkzeug verwendet werden, welches in Figur 6 mit der Bezugsziffer 244 bezeichnet ist. Dieses Greiferwerkzeug 244 erzwingt eine Selbstzentrierung des Verbindungselements 228 gegen eine Anschlagsfläche 246. In Kombination mit der Einführhilfe durch den Einführabschnitt 238 werden damit die Toleranzen für die Montage in der Temperaturfühlerbohrung 132 minimiert.

In Figur 5 ist ausschnittsweise ein erfindungsgemäßer Sensor 110 in Schnittdarstellung gezeigt, welcher ein Kontaktierungsmodul 210 umfasst. Bei der gezeigten Darstellung ist bereits der Einführabschnitt 238 des Verbindungselements 228 in die Temperaturfühlerbohrung 132 eingeführt, und es ist ein Schaltungsträger 218 mit Durchkontaktierungsbohrungen 224 auf die freiliegenden Enden 248 aufgesetzt. Diese freiliegenden Enden 248 können, in dem dargestellten wie auch in anderen Ausführungsbeispielen des erfindungsgemäßen Sensors 110 und des Kontaktierungsmoduls 210, beispielsweise an ihrer Oberfläche vergoldet sein. Es kann beispielsweise an den Durchkontaktierungen 224 anschließend eine Lötverbindung zwischen den Steckerkontaktstiften 220 und dem Schaltungsträger 218 hergestellt werden. Die bevorzugte Vergoldung der Oberflächen hat den Vorteil, dass eine bessere Lötverbindung hergestellt wird und dass beispielsweise auch eine Laserlötung anstelle zum Beispiel einer herkömmlichen Kolbenlötung erfolgen kann.

In Figur 7 ist schließlich, zur Verdeutlichung eines bevorzugten Fertigungsverfahrens für den Sensor 110 , eine perspektivische Darstellung eines Zwischenproduktes bei der Herstellung der Kontaktierungsmodule 210 gezeigt. Dabei wird ein Leadframe 250 verwendet, welcher beispielsweise als bandförmiges Stanz-Biegeteil ausgestaltet ist und welcher die Steckerkontaktstifte 220 mit den fahnenförmigen Kontaktflächen 222 beinhaltet. Die Steckerkontaktstifte 220 sind bereits vorgebogen und können beispielsweise bereits entsprechend an ihren Enden 248 vergoldet sein.

Der Leadframe 250 kann beispielsweise aus einem Messing-, einem Kupfer- oder einem Stahlblech gefertigt sein. Der Leadframe 250 beinhaltet weiterhin zwischen den einzelnen Kontaktierungsmodulen 210 in dem in Figur 7 dargestellten Verfahrensstadium Stege 252, welche eine gleichzeitige Umspritzung der einzelnen Steckerkontaktstifte 220 für eine Vielzahl von Kontaktierunsmodulen 210 ermöglichen. Auf diese Weise können die Kontaktierungsmodule 210 im Nutzen hergestellt werden. Die Stege 252 können anschließend durch einen Stanzprozess entfernt werden, um die einzelnen Steckerkontaktstifte 220 gegeneinander zu isolieren.

Weiterhin ist in dem in Figur 7 dargestellten Verfahrensstadium zu erkennen, dass die Enden 216 der Anschlussleitungen 212 des Temperaturfühlers 140 mit den fahnenförmigen Kontaktflächen 222 der Steckerkontaktstifte 220 überlappen. Diese Überlappung ermöglicht später (siehe Figurn 3 und 4) ein Zusammenpressen der Kontaktflächen 222 und der Enden 216 und eine Widerstandsverschweißung.

## Patentansprüche

1. Sensor (110), umfassend mindestens einen Drucksensor (124) und mindestens einen Temperaturmessfühler (140) zur Erfassung einer Temperatur, wobei der Sensor (110) einen Sensorkörper (112) zur Halterung des Drucksensors (124) und des Temperaturmessfühlers (140) aufweist, wobei der Temperaturmessfühler (124, 140) mindestens eine Anschlussleitung (212) in Form eines Drahtes aufweist, **dadurch gekennzeichnet, dass** der Sensor (110) modular aufgebaut ist und ein von dem Sensorkörper (112) getrennt ausgebildetes Kontaktierungsmodul (210) zur elektrischen Kontaktierung des Temperaturmessfühlers (140) umfasst, wobei das Kontaktierungsmodul (210) mindestens ein Verbindungselement (228) und mindestens einen Steckerkontaktstift (220) umfasst, wobei der Steckerkontaktstift (220) in mindestens einem Verbindungsbereich (232) von dem Verbindungselement (228) umgeben ist und wobei der Steckerkontaktstift (220) in dem Verbindungsbereich in elektrischer Verbindung zu der Anschlussleitung (212) steht.

2. Sensor (110) nach dem vorhergehenden Anspruch, wobei das Verbindungselement (228) mindestens eine Nut (234) zum Einbringen der Anschlussleitung (212) aufweist, wobei das Verbindungselement (228) in dem mindestens einem Verbindungsbereich (232) einen Zugang zu dem Steckerkontaktstift (220) ermöglicht, wobei die Nut (234) derart zu dem Verbindungsbereich (232) angeordnet ist, dass bei in die Nut (234) eingebrachter Anschlussleitung (212) in dem Verbindungsbereich (232) der Steckerkontaktstift (220) und die Anschlussleitung (212) miteinander verbindbar sind.

3. Sensor (110) nach Anspruch 2, wobei der Steckerkontaktstift (220) im Verbindungsbereich (232) eine Steckerrichtung (226) definiert, wobei die Nut (234) derart zu der Steckerrichtung (226) ausgerichtet ist, dass diese einen Winkel zwischen 10° und 25° und bevorzugt im Bereich zwischen 15° und 20° bildet.

4. Sensor (110) nach Anspruch 2 oder 3, wobei das Verbindungselement (228) im Bereich der Nut (234) mindestens einen Einführabschnitt (238) zum Einführen des Temperaturmessfühlers (140) in eine Messfühlerbohrung (132) aufweist, wobei der Einführabschnitt (238) zumindest teilweise im Wesentlichen parallel zu der Nut (234) orientiert ist.

5. Sensor (110) nach dem vorhergehenden Anspruch, wobei der Einführabschnitt (238) mindestens einen Anschlag (240) zur Begrenzung einer Einführtiefe des Temperaturmessfühlers (140) in die Messfühlerbohrung (132) aufweist.

6. Sensor (110) nach einem der beiden vorhergehenden Ansprüche, wobei der Einführabschnitt (238) mindestens eine umfangsseitig angeordnete Rastnase (242) aufweist.

7. Sensor (110) nach einem der vorhergehenden Ansprüche, wobei der Steckerkontaktstift (220) im Verbindungsbereich (232) mindestens eine zumindest abschnittsweise ebene Kontaktfläche (222) als Schweißfläche aufweist.

8. Sensor (110) nach einem der vorhergehenden Ansprüche, weiterhin aufweisend mindestens einen Schaltungsträger (218), wobei der Steckerkontaktstift (220) mit mindestens einem elektrischen Kontakt des Schaltungsträgers (218) verbunden ist, insbesondere mit mindestens einer Kontaktbohrung (224).

9. Verfahren zur Herstellung eines Sensors (110) nach einem der vorhergehenden Ansprüche, wobei mindestens zwei Steckerkontaktstifte (220) verwendet werden, wobei die mindestens zwei Steckerkontaktstifte (220) als Bandware durch mindestens einen Steg verbunden sind, wobei bei der Herstellung der mindestens eine Steg durchtrennt wird, um eine elektrische Isolierung der mindestens zwei Steckerkontaktstifte (220) gegeneinander zu erzeugen.

10. Verfahren nach dem vorhergehenden Anspruch, wobei die mindestens zwei Steckerkontaktstifte (220) in Leadframe-Technologie hergestellt werden, wobei mindestens ein Blechmaterial gestanzt wird, insbesondere ein Kupferblechmaterial.

11. Verfahren nach einem der beiden vorhergehenden Ansprüche, wobei das Verbindungselement (228) durch Umspritzen des Steckerkontaktstifts (220) hergestellt wird.

12. Verfahren nach einem der drei vorhergehenden Ansprüche, wobei der mindestens eine Steckerkontaktstift (220) des Kontaktierungsmoduls (210) und die mindestens eine Anschlussleitung (212) des Temperaturmessfühlers (140) miteinander verbunden werden, indem mindestens ein Schweißstempel (231) in den Verbindungsbereich (232) eingebracht wird, wobei der Steckerkontaktstift (220) und die Anschlussleitung (212) verschweißt werden, insbesondere durch ein Widerstandsschweißverfahren.

## Claims

1. Sensor (110), comprising at least one pressure sensor (124) and at least one temperature measurement sensing device (140) for detecting a temperature, wherein the sensor (110) has a sensor body (112) for holding the pressure sensor (124) and the temperature measurement sensing device (140), wherein the temperature measurement sensing device (124, 140) has at least one connection line (212) in the form of a wire, **characterized in that** the sensor (110) is of modular construction and comprises a contact-making module (210), which is formed separately from the sensor body (112), for making electrical contact with the temperature measurement sensing device (140), wherein the contact-making module (210) comprises at least one connecting element (228) and at least one plug contact pin (220), wherein the plug contact pin (220) is surrounded by the connecting element (228) in at least one connecting region (232), and wherein the plug contact pin (220) is electrically connected to the connection line (212) in the connecting region.

2. Sensor (110) according to the preceding claim, wherein the connecting element (228) has at least one groove (234) for inserting the connection line (212), wherein the connecting element (228) allows access to the plug contact pin (220) in the at least one connecting region (232), wherein the groove (234) is arranged with respect to the connecting region (232) in such a way that, with the connection line (212) introduced into the groove (234), the plug contact pin (220) and the connection line (212) can be connected to one another in the connecting region (232).

3. Sensor (110) according to Claim 2, wherein the plug contact pin (220) defines a plug direction (226) in the connecting region (232), wherein the groove (234) is oriented with respect to the plug direction (226) in such a way that it forms an angle of between 10° and 25°, and preferably in the range of between 15° and 20°.

4. Sensor (110) according to Claim 2 or 3, wherein the connecting element (228) has at least one insertion section (238), for inserting the temperature measurement sensing device (140) into a measurement sensing device bore (132), in the region of the groove (234), wherein the insertion section (238) is oriented at least partially substantially parallel to the groove (234).

5. Sensor (110) according to the preceding claim, wherein the insertion section (238) has at least one stop (240) for limiting an insertion depth of the temperature measurement sensing device (140) into the measurement sensing device bore (132).

6. Sensor (110) according to either of the two preceding claims, wherein the insertion section (238) has at least one latching lug (242) which is arranged on the circumference.

7. Sensor (110) according to one of the preceding claims, wherein the plug contact pin (220) has at least one contact area (222), which is planar at least in sections, as the welding area in the connecting region (232).

8. Sensor (110) according to one of the preceding claims, further having at least one circuit mount (218), wherein the plug contact pin (220) is connected to at least one electrical contact of the circuit mount (218), in particular to at least one contact bore (224).

9. Method for producing a sensor (110) according to one of the preceding claims, wherein at least two plug contact pins (220) are used, wherein the at least two plug contact pins (220) as tape products are connected by at least one web, wherein, during production, the at least one web is severed in order to electrically insulate the at least two plug contact pins (220) from one another.

10. Method according to the preceding claim, wherein the at least two plug contact pins (220) are produced using leadframe technology, wherein at least one sheet-metal material is stamped, in particular a sheet-copper material.

11. Method according to either of the two preceding claims, wherein the connecting element (228) is produced by encapsulation of the plug contact pin (220) by injection-moulding.

12. Method according to one of the three preceding claims, wherein the at least one plug contact pin (220) of the contact-making module (210) and the at least one connection line (212) of the temperature measurement sensing device (140) are connected to one another by at least one welding die (231) being inserted into the connecting region (232), wherein the plug contact pin (220) and the connection line (212) are welded, in particular by a resistance welding method.

## Revendications

1. Capteur (110), comprenant au moins un capteur de pression (124) et au moins une sonde de mesure de température (140) destinée à l'acquisition d'une température, le capteur (110) présentant un corps de capteur (112) servant à maintenir le capteur de pression (124) et la sonde de mesure de température (140), la sonde de mesure de température (124, 140) présentant au moins une ligne de raccordement (212) sous la forme d'un fil métallique, **caractérisé en ce que** le capteur (110) est de construction modulaire et comprend un module d'établissement de contact (210) configuré séparément du corps de capteur (112) et servant à l'établissement du contact électrique avec la sonde de mesure de température (140), le module d'établissement de contact (210) comprenant au moins un élément de liaison (228) et au moins une broche de contact à fiche (220), la broche de contact à fiche (220) étant entourée par l'élément de liaison (228) dans au moins une zone de liaison (232) et la broche de contact à fiche (220) se trouvant en liaison électrique avec la ligne de raccordement (212) dans la zone de liaison.

2. Capteur (110) selon la revendication précédente, avec lequel l'élément de liaison (228) présente au moins une rainure (234) servant à l'introduction de la ligne de raccordement (212), l'élément de liaison (228) permettant un accès à la broche de contact à fiche (220) dans l'au moins une zone de liaison (232), la rainure (234) étant disposée par rapport à la zone de liaison (232) de telle sorte que lorsque la ligne de raccordement (212) est introduite dans la rainure (234), la broche de contact à fiche (220) et la ligne de raccordement (212) peuvent être reliées l'une à l'autre dans la zone de liaison (232).

3. Capteur (110) selon la revendication 2, avec lequel la broche de contact à fiche (220) définit dans la zone de liaison (232) un sens d'enfichage (226), la rainure (234) étant orientée par rapport au sens d'enfichage (226) de telle sorte que celle-ci forme un angle entre 10° et 25° et de préférence dans la plage entre 15° et 20°.

4. Capteur (110) selon la revendication 2 ou 3, avec lequel l'élément de liaison (228) présente dans la zone de la rainure (234) au moins une portion d'introduction (238) servant à introduire la sonde de mesure de température (140) dans un orifice pour sonde de mesure (132), la portion d'introduction (238) étant au moins partiellement orientée sensiblement parallèlement à la rainure (234).

5. Capteur (110) selon la revendication précédente, avec lequel la portion d'introduction (238) présente au moins une butée (240) destinée à délimiter une profondeur d'introduction de la sonde de mesure de température (140) dans l'orifice pour sonde de mesure (132).

6. Capteur (110) selon l'une des deux revendications précédentes, avec lequel la portion d'introduction (238) présente au moins un tenon d'enclenchement (242) disposé sur le pourtour.

7. Capteur (110) selon l'une des revendications précédentes, avec lequel la broche de contact à fiche (220) présente dans la zone de liaison (232) au moins une surface de contact (222), plane au moins dans certaines zones, qui fait office de surface de soudage.

8. Capteur (110) selon l'une des revendications précédentes, présentant en outre au moins un porte-circuit (218), la broche de contact à fiche (220) étant reliée avec au moins un contact électrique du porte-circuit (218), notamment avec au moins un orifice de contact (224).

9. Procédé de fabrication d'un capteur (110) selon l'une des revendications précédentes, au moins deux broches de contact à fiche (220) étant utilisées, les au moins deux broches de contact à fiche (220) étant reliées par au moins un élément jointif en tant que rubans, l'au moins un élément jointif étant sectionné lors de la fabrication afin de produire une isolation électrique des au moins deux broches de contact à fiche (220) l'une par rapport à l'autre.

10. Procédé selon la revendication précédente, selon lequel les au moins deux broches de contact à fiche (220) sont fabriquées avec la technologie à grille de connexion, au moins un matériau en tôle étant estampé, notamment un matériau en tôle à base de cuivre.

11. Procédé selon l'une des deux revendications précédentes, selon lequel l'élément de liaison (228) est fabriqué par enrobage de la broche de contact à fiche (220).

12. Procédé selon l'une des trois revendications précédentes, selon lequel l'au moins une broche de contact à fiche (220) du module d'établissement de contact (210) et l'au moins une ligne de raccordement (212) de la sonde de mesure de température (140) sont reliées ensemble en introduisant au moins une étampe de soudage (231) dans la zone de liaison (232), la broche de contact à fiche (220) et la ligne de raccordement (212) étant soudées, notamment par un procédé de soudage par résistance.
